# EUROPEAN PATENT APPLICATION

(11) **EP 2 117 163 A1**
(43) Date of publication of application: **11.11.2009**
(21) Application number: 08715161.9
(22) Date of filing: 06.03.2008
(51) Int. Cl.: H04L 12/16, H04L 29/08, H04L 12/56, H04L 12/66

(54) **PURCHASE SERVICE PROCESSING METHOD, SYSTEM AND GATEWAY DEVICE**

(30) Priority: 26.03.2007 CN 200710073668
(71) Applicant: Huawei Technologies Co., Ltd., Longgang District, Shenzhen Guangdong 518129 (CN)
(72) Inventor: LU, Gang, Shenzhen Guangdong 518129 (CN); LI, Ronggao, Shenzhen Guangdong 518129 (CN)
(74) Representative: Körber, Martin Hans
(86) International application number: PCT/CN2008/070425
(87) International publication number: WO 2008/116411

(57) **Abstract**

A method for processing subscription service is provided by an embodiment of the invention adapted to establish a connection with a terminal for subscribing to a service through a network, where the terminal is a wireless terminal or a fixed wired network terminal. The method comprises the following steps: receiving from a terminal a subscription service request, which includes a service field; determining whether the subscription service request is legal, according to the service field; and forwarding the subscription service request if the subscription service request is legal. Meanwhile, an embodiment of the invention provides a system for processing subscription service and a gateway device. The embodiment of the invention makes it possible to prevent any terminal from accessing the network through the gateway device, which eliminates the potential hazard in the subscription system. Meanwhile, according to the embodiment of the invention, illegal terminals can not access the subscription network, which refines the subscription network and improves the stability of the subscription network.

## Description

### FIELD OF THE INVENTION

The present invention relates to the technical field of data connection management, and more particularly, to a method, system and a gateway device for processing subscription service.

### BACKGROUND

With the development of the Internet technology, online e-commerce has become an important part of the current subscription services. With the ever increase of consumer products (CP), it is possible to conduct on-line subscription through mobile stations (MS) such as the handset (HS) and Personal Digital Assistant (PDA).

In the prior art, the online subscription service through the HS is principally done as follows: A Wireless Application Protocol Gateway (WAPGW) forwards a subscription request from the HS according to a charging authentication of the HS, and a Wireless Application Protocol (WAP) subscription platform server returns a subscription service list. The HS subscribes to the service needed according to the subscription service list.

In the implementation of the invention, the inventor found that the subscription platform server will directly transmit the subscription service list to the HS and charge the HS when the HS that accesses the subscription platform server for subscription service through the WAPGW directly is a malicious terminal, i.e. an HS that has not signed a subscription agreement with the subscription service provider before getting online, or alternatively, after the WAPGW forwards a mistaken subscription request. Thus, any HS can subscriber to a service through the subscription platform server, which poses a threat to the subscription service system. Furthermore, for a subscription network that any HS may access, there might be a relatively large burden for the subscription network, which will deteriorate the stability of the subscription network.

### SUMMARY

The embodiments of present invention provide a method, system and a gateway device for processing subscription service, with an aim of eliminating the potential hazard in the subscription system and improving the stability of the subscription network.

An embodiment of the invention provides a method for processing subscription service, which includes: re ceiving from a terminal a subscription service r equest which includes a service field, determining whether the subscription service request is legal, according to the service field, and forwarding the subscription service request if the subscription service request is legal.

A system for processing subscription service provided by an embodiment of the invention includes: a subscription platform server adapted to process subscription service from a terminal user; and a gateway device adapted to receive a subscription service request from the terminal and determine whether the subscription request from the terminal is legal according to the subscription service request, and forward the subscription service request to the subscription platform server when the subscription service request is legal.

A gateway device provided by an embodiment of the invention includes:

a receiving unit adapted to receive a subscription service request from a terminal;

a subscription request determining unit adapted to determine whether the subscription request from the terminal is legal according to the subscription service request; and

a forwarding unit adapted to forward the subscription service request.

Compared with the prior art, the subscription service processing method according to the embodiment of the invention makes it possible to prevent any terminal from accessing the network through the gateway device, and therefore, eliminates the potential hazard in the subscription system through receiving a subscription service request from a terminal by a receiving unit, determining whether the subscription request from the terminal is legal by a subscription request determining unit, and forwarding the subscription service request when the subscription request is legal. Meanwhile, according to the embodiment of the invention, illegal terminals can not access the subscription network. This refines the subscription network and improves the stability of the subscription network. Moreover, for terminal user, the embodiment of the invention avoids charging caused by the mistaken subscription request from the terminal and improves the accuracy of the charging.

### BRIEF DESCRIPTION OF THE DRAWINGS

Figure 1 illustrates a flow chart of a method for processing subscription service according to an embodiment of the invention;

Figure 2 illustrates a block diagram of a system for processing subscription service according to an embodiment of the invention; and

Figure 3 illustrates a block diagram of a gateway device according to an embodiment of the invention.

### DETAILED DESCRIPTION

In the following, detailed implementations of the invention will be elaborated with reference to the figures and embodiments.

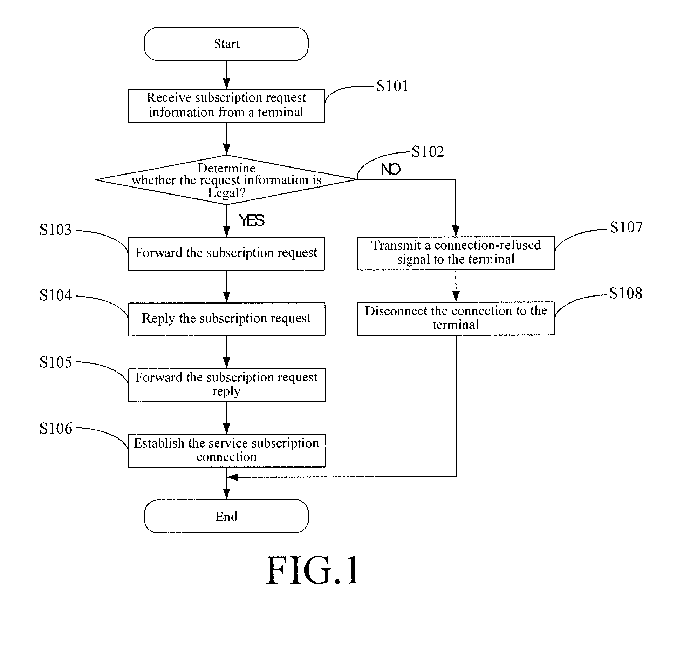

Referring to Fig. 1, a flow chart of a method for processing subscription service is provided by an embodiment of the invention to establish a connection with a terminal for subscribing to a service through a network. The method for processing subscription service includes the following steps:

Step S101: A subscription service request from the terminal is received. The terminal may be a wireless terminal or a fixed wired network terminal. The wireless terminal may be consumer electrical appliance such as an HS, a PDA, a Notebook Computer (NB), a Personal Computer (PC). The fixed wired network terminal includes an NB, a PC, a telephone and a Set-top Box (STB). In the embodiment of the invention is described herein in connection with an HS. The subscription service request includes a service field of a mobile number information header, such as the service field x-up-calling-line-id.

Step S 102: Whether the subscription request from the terminal is legal is determined according to the subscription service request. According to the embodiment of the invention, whether the subscription request from the terminal is legal is determined by searching a legal field library stored at a gateway device according to the service field in the subscription service request. If the service field is found, the subscription service request is legal; if the field is not found, the subscription service request is illegal. For example, taking the WAP as an example, an encrypted Hyper Text Transfer Protocol (HTTP) tunnel is established between the terminal and the WAPGW, and therefore, Secure Hyper Text Transfer Protocol (HTTPS) transmission is not needed in the subsequent request. Instead, a request is initiated in plain text. The agreement between the WAPGW and the subscription platform server includes: a service field of a mobile number information header, such as the service field x-up-calling-line-id. A determination on whether the service field is included in the legal field library is made. If the subscription service request is legal, then go to step S103; if the subscription service request is illegal, then go to step S107.

Step S103: The subscription service request is forwarded. The forwarding of the subscription service request can be done by directly forwarding the subscription information, or alternatively, by translating the application layer protocol. In the embodiment, HTTP is taken as an example. The forwarding in this step is done by protocol translation. For example, if an online subscription is done by an HS, then the protocol translation is done between the WAP and HTTP. Otherwise if an online subscription is done by a fixed telephone, PC or STB, since they all support HTTP, the forwarding of the subscription service request may be done directly without protocol translations.

Step S104: The subscription request is replied. The subscription request reply is to indicate to the terminal user that the subscription service connection is successful. In the embodiment, the subscription platform server issues a reply information to the WAP gateway to reply to the subscription request.

Step S105: The subscription request reply is forwarded. The principle of forwarding the subscription request reply in this step is the same with that of the forwarding of step S103. That is to forward the subscription request reply to the user directly, or after the protocol translations.

Step S106: A subscription service connection is established. In the embodiment, the subscription protocol translation is performed according to the subscription service request from the terminal to establish the subscription service connection. Taking the WAP as an example, an encrypted HTTP tunnel is established between the terminal and the WAPGW to transmit the subscription request in plain text. To establish the connection by the WAPGW is to perform the protocol translation between the WAP and HTTP. A subscription service connection is established when Step S106 is finished.

Step S107: A connection reject signal is transmitted to the terminal. In the embodiment, to transmit a connection reject signal is to transmit a prompt short message to the terminal to indicate to the user that the related subscription service can not be accomplished.

Step S108: The terminal is disconnected. In the embodiment, the WAPGW no longer receives the subscription service request from the terminal. It is obvious to those skilled in the art that Steps S017 and S108 may be performed in any order, which will not be elaborated here.

From the above solution we can see that compared with the prior art, the subscription service processing method according to the embodiment of the invention makes it possible to prevent any terminal from accessing the network through the gateway device, and therefore eliminates the potential hazard in the subscription system through receiving a subscription service request from a terminal, determining whether the subscription request from the terminal is legal, and forwarding the subscription service request when the subscription request is legal. Meanwhile, according to the embodiment of the invention, illegal terminals can not access the subscription network. This refines the subscription network and improves the stability of the subscription network. Moreover, for terminal user, the embodiment of the invention avoids charging caused by the mistaken subscription request from the terminal and improves the accuracy of the charging. The terminal user can be informed of the reason of the connection failure by transmitting to the terminal a connection reject signal which indicates that the user can not perform a subscription service. By disconnecting the connection with the terminal, undesired waste of network resources is avoided, which saves the network resources. By replying to the subscription request and forwarding the subscription request reply, the terminal user may perform normal subscription service.

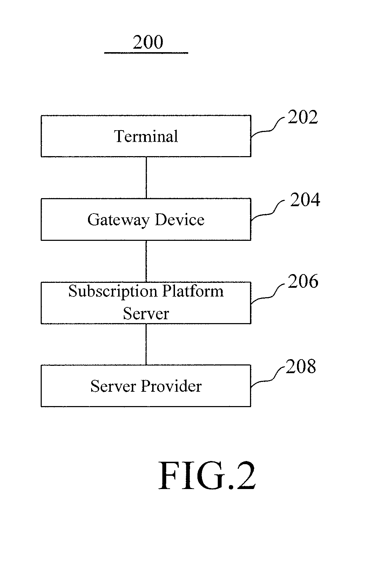

Please refer to Fig. 2, based on the concept of the above said method for processing subscription service, a system 200 for processing subscription service is provided according to an embodiment of the invention. The system 200 is adapted to establish a connection with a terminal for subscribing to a service through a network. The system includes a terminal 202, a gateway device 204, a subscription platform server 206 and a server provider (SP) 208.

The terminal 202 is adapted to receive a subscription request from a user and transmit a subscription request information to the gateway device 204. The terminal may be a wireless terminal or a fixed wired network terminal. The wireless terminal may be consumer electrical appliance such as an HS, a PDA, an NB, and a PC. The fixed wired network terminal includes an NB, a PC, a telephone and an STB.

The gateway device 204 is adapted to forward the subscription request from the terminal 202 and forward the subscription request reply from the subscription platform server 206.

The subscription platform server 206 is adapted to realize the subscription service of the terminal user. The subscription platform server includes a subscription platform and a portal website information. In the embodiment, the subscription platform server 206 performs the subscription service in the application layer based on the HTTP.

The sever provider 208 is adapted to provide the final subscribed service.

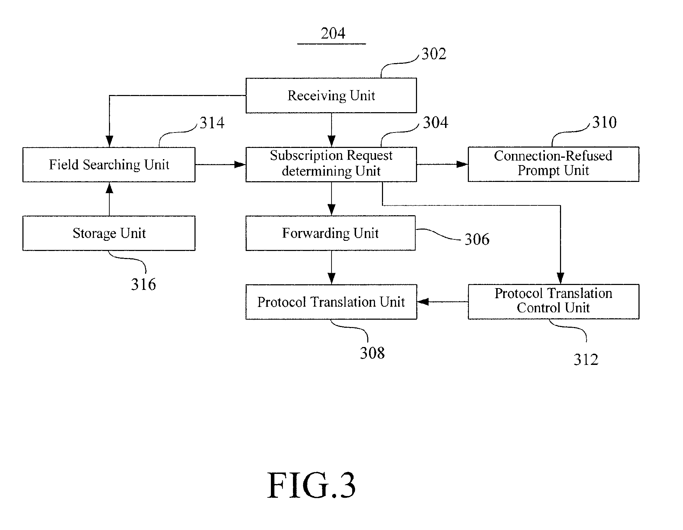

With reference to Fig. 3, the gateway device 204 further includes a receiving unit 302, a subscription request determining unit 304, a forwarding unit 306, a protocol translation unit 308, a connection-refused prompt unit 310, a protocol translation control unit 312, a field searching unit 314 and a storage unit 316.

The receiving unit 202 is adapted to receive a subscription request from a terminal 200. The terminal 202 may be a wireless terminal or a fixed wired network terminal. The wireless terminal may be consumer electrical appliance such as an HS, a PDA, an NB, and a PC. The fixed wired network terminal includes an NB, a PC, a telephone and an STB. In the embodiment of the invention, the HS is taken as the example. The subscription service request includes a service field of a mobile number information header, such as the service field x-up-calling-line-id.

The subscription request determining unit 304 is adapted to determine whether the subscription request from the terminal 202 is legal according to the subscription service request. According to the embodiment of the invention, whether the subscription request from the terminal 202 is legal is determined by searching a legal field library stored at the gateway device according to the service field in the subscription service request. If the service field is found, the subscription service request is legal; if the field is not found, the subscription service request is illegal. Taking the WAP as an example, an encrypted HTTP tunnel is established between the terminal 202 and the WAPGW to initiate a request in plain text instead of using HTTPS transmission in the subsequent request. The agreement between the WAPGW and the subscription platform server includes a service field of a mobile number information header, such as the service field x-up-calling-line-id. A determination on whether the service field is included in the legal field library is made.

The forwarding unit 306 is adapted to forward the subscription service request and reply to the subscription request. The forwarding of the subscription service request can be done by directly forwarding the subscription information, or alternatively, by translating the application layer protocol. In the embodiment, HTTP is taken as the example. The forwarding in this step is done by protocol translation. For example, if an online subscription is done by an HS, then the protocol translation is done between the WAP and HTTP. Otherwise if an online subscription is done by a fixed telephone, PC or STB, since they all support HTTP, the forwarding of the subscription service request may be done directly without protocol translations The principle of forwarding the reply request is the same with that of the above forwarding, i.e., the subscription request reply is forwarded to the user directly or after the protocol translation is performed.

The protocol translation unit 308 is adapted to perform the protocol translation between the terminal 202 and a subscription platform server 206. If the subscription service request information is based on a different protocol, the protocol translation unit 308 may perform the protocol translation. If the subscription service request information is based on the same protocol, protocol translation unit 308 forwards the subscription service request information directly. In the embodiment, for example, the terminal 202 uses WAP to transmit a subscription service request, and therefore, the WAP is translated into the HTTP in order to perform the subscription service.

The connection-refused prompt unit 310 is adapted to transmit a connection-refused signal to the terminal 202. In the embodiment, a prompt short message is transmitted to the terminal 202 which indicates to the user that the related subscription service can not be accomplished.

The protocol translation control unit 312 is adapted to control whether the protocol translation unit 308 should perform the protocol translation, according to a determination result from the subscription request determining unit 304. If the subscription service request is legal, the protocol translation control unit 312 enables the protocol translation unit 308 to perform the protocol translation. If the subscription service request is illegal, the protocol translation control unit 312 prohibits the protocol translation unit 308 from performing the protocol translation.

The field searching unit 314 is adapted to search the stored field library according to a service field in the subscription service request to obtain a search result. The subscription request determining unit 304 determines whether the subscription service request is legal according to the search result and the service field. In the embodiment of the invention, the HS is taken as the example. The subscription service request includes a service field of a mobile number information header, such as the service field x-up-calling-line-id. The legal field library is searched according to the service field x-up-calling-line-id. If the service field x-up-calling-line-id is found, the subscription service r equest is legal; if the field x-up-calling-line-id is not found, the subscription service request is illegal.

The storage unit 316 is adapted to store the legal field library.

From the above solution we can see that compared with the prior art, the subscription service processing method according to the embodiment of the invention makes it possible to prevent any terminal from accessing the network through the gateway device, and therefore eliminates the potential hazard in the subscription system by receiving a subscription service request from the terminal 202 by a receiving unit 302, determining whether the subscription request from the terminal 202 is legal by a subscription request determining unit 304, and forwarding the subscription service request when the subscription request is legal. Meanwhile, according to the embodiment of the invention, illegal terminals can not access the subscription network, which refines the subscription network and improves the stability of the subscription network. Moreover, for terminal user, the embodiment of the invention avoids charging caused by the mistaken subscription request from the terminal and improves the accuracy of the charging. The terminal user can be informed of the reason of the connection failure by transmitting to the terminal 202 a connection reject signal which indicates that the user can not perform a subscription service. By disconnecting the connection with the terminal 202, undesired waste of network resources is avoided, which saves the network resources. By replying to the subscription request and forwarding the subscription request reply, the terminal user may perform normal subscription service.

Based on the description of the above embodiment, those skilled in the art will appreciate that the invention may be implemented with the combination of software and the necessary general hardware platform or with the hardware only. In most cases, the former implementation is a preferred choice. Based on such understanding, the technical solution of the embodiment of the invention may be represented in a software product, which may be stored in a storage medium and includes several instructions which enable a computer device (such as a PC, a server or a network device) to execute the method according to the embodiment of the invention.

In summary, the description above is only preferred embodiments of the invention, and is not intended to limit the scope of the disclosure. Any modification, equivalent substitution and improvement within the spirit and scope of the disclosure are intended to be included in the scope of the disclosure.

## Claims

1. A method for processing subscription service, comprising:
receiving from a terminal a subscription service request, which includes a service field;
determining whether the subscription service request is legal, according to the service field; and
forwarding the subscription service request if the subscription service request is legal.

2. The method for processing subscription service of claim 1, wherein the step of forwarding the subscription service request further comprises: performing subscription protocol translation and transmitting the subscription service request using the translated protocol.

3. The method for processing subscription service of claim 1, wherein the method further comprises: transmitting a connection reject signal to the terminal if the subscription service request is illegal.

4. The method for processing subscription service of any of claims 1 to 3, wherein the method further comprises: disconnecting the connection with the terminal if the subscription service request is illegal.

5. The method for processing subscription service of claim 2, wherein the terminal is a handset, the subscription service is a Wireless Application Protocol (WAP) subscription service, the subscription protocol translation is a protocol translation performed between the WAP and a Hyper Text Transfer Protocol (HTTP).

6. The method for processing subscription service of claim 1, wherein the method further comprises: forwarding to the terminal a subscription request reply to indicate to the terminal user that the subscription service connection is successful.

7. The method for processing subscription service of claim 1, wherein the step of determining whether the subscription service request is legal comprises: searching a legal field library stored at a gateway device according to the service field in the subscription service request to make the determination; if the service field is found, the subscription service request is legal; if the field is not found, the subscription service request is illegal.

8. A system for processing subscription service, comprising:
a subscription platform server, adapted to process subscription service from a terminal user; and
a gateway device, adapted to receive a subscription service request from the terminal and determine whether the subscription request from the terminal is legal according to the subscription service request; and forward the subscription service request to the subscription platform server when the subscription service request is legal.

9. The system for processing subscription service of claim 8, wherein the gateway device searches a legal field library stored at the gateway device according to the service field in the subscription service request to determine whether the subscription service request from the terminal is legal; and if the service field is found, the subscription service request is legal.

10. A gateway device comprising:
a receiving unit, adapted to receive a subscription service request from a terminal;
a subscription request determining unit, adapted to determine whether the subscription service request from the terminal is legal according to the subscription service request; and
a forwarding unit, adapted to forward the subscription service request.

11. The gateway device of claim 10, wherein the gateway device further comprises:
a protocol translation unit, adapted to translate communication protocols between the terminal and a subscription platform server.

12. The gateway device of claim 10, wherein the gateway device further comprises: a connection-refused prompt unit adapted to transmit a connection-refused signal to the terminal.

13. The gateway device of claim 10, wherein the forwarding unit is further adapted to reply to the subscription request, the subscription request reply indicates to the terminal user that the subscription service connection is successful.

14. The gateway device of claim 11, wherein the gateway device further comprises: a protocol translation control unit, adapted to control whether the protocol translation unit should perform protocol translation.

15. The gateway device of claim 10, wherein the gateway device further comprises: a storage unit, adapted to store a legal field library; a field searching unit, adapted to search the legal field library according to a service field in the subscription service request; the subscription request determining unit determines whether the subscription service request is legal according to the search result of the field searching unit; if the service field is found, the subscription service request is legal; if the field is not found, the subscription service request is illegal.
